Europäisches Patentamt

European Patent Office

Office européen des brevets

(11) Publication number: **0 206 826**
**B1**

(12) **EUROPEAN PATENT SPECIFICATION**

(45) Date of publication of patent specification: **29.08.90**

(21) Application number: **86304940.9**

(22) Date of filing: **25.06.86**

(51) Int. Cl.⁵: **B 32 B 27/32,** B 65 D 75/00,
B 65 D 65/40

(54) **Heat shrinkable laminate film and its use.**

(30) Priority: **25.06.85 JP 138771/85**

(43) Date of publication of application:
**30.12.86 Bulletin 86/52**

(45) Publication of the grant of the patent:
**29.08.90 Bulletin 90/35**

(84) Designated Contracting States:
**DE FR GB NL**

(56) References cited:
**FR-A-2 173 119**
**US-A-4 161 562**

(73) Proprietor: **KUREHA KAGAKU KOGYO KABUSHIKI KAISHA**
**9-11 Horidome-cho 1-chome Nihonbashi Chuo-ku**
**Tokyo 103 (JP)**

(72) Inventor: **Ohya, Masaki**
**109-2 Asahidai Kaneyama-machi**
**Iwaki-shi Fukushima-ken (JP)**
Inventor: **Nishimoto, Yoshiharu**
**1-3-19 Nakaoka-machi**
**Iwaki-shi Fukushima-ken (JP)**

(74) Representative: **Lawrence, Peter Robin Broughton et al**
**GILL JENNINGS & EVERY 53-64 Chancery Lane**
**London WC2A 1HN (GB)**

Courier Press, Leamington Spa, England.

**Description**

The present invention relates to a laminate film which shows a specified heat-shrinking behaviour and is suitable for the so-called heat shrink packaging of food.

In the packaging of fresh meat, process meat, cheese and other fatty foods, there are many cases where irregularly shaped foods and foods having protuberances such as bones or various appendages such as trays are packaged. Heat shrink packaging is the most simple method industrially for packaging such foods, and is the most suitable method for this purpose.

In the heat shrink packaging of fatty foods such as processed meat, etc, thermal treatment at high temperatures is carried out for the purpose of sterilisation and for cooking whilst the fatty food is in contact with the film. The film may be plasticised by the fats and the high temperature. As the film is heat-shrunk, the shrink force tends to result in the film being stretched thinly, which often results in the formation of holes in the packaging film on the uneven parts of the surface of the food and particularly, resulting in rupture in the seal line or in the vicinity thereof.

Although it is possible to prevent the formation of such ruptures by using a film showing a smaller shrink force, the shrinkage becomes smaller in the case of using such a film, and as a result, the film does not cling to the packaged foods. The problem is that it is difficult to produce a packaged article without spoilage and loss of appearance using the known heat shrinkable films.

For solving the problem, numerous kinds of laminate films have been proposed.

For instance, (1) a biaxially stretched five-layer laminate film comprising a first layer (outermost layer) of an ionomer, an olefin homopolymer, an olefin copolymer or mixture of an olefin homopolymer with an olefin copolymer, a second layer (adhesive layer) of an ethylene copolymer, a third layer (gas-barrier layer) of a vinylidene chloride copolymer, a fourth layer (adhesive layer) of an ethylene copolymer and a fifth layer (innermost layer) of an ionomer (US Patent No. 4,161,562); (2) a heat shrinkable tubular laminate film comprising a core layer of a vinylidene chloride copolymer, an outermost layer and innermost layer of an α-olefin polymer, a layer of a thermoplastic resin being imposed between the core layer and the outermost layer plus innermost layer. (Japanese Patent Application Laid-Open (Kokai) No. 56-89945 (1981)); (3) a flexible, multilayer plastic sheet which comprises the innermost layer of a self-adhering plastics material such as unsaturated ester polymers such as ethylene/unsaturated ester copolymers, for example, ethylene/vinyl acetate, ethylene/vinyl propionate, ethylene/methyl methacrylate, ethylene/ethyl methacrylate, ethylene/ethyl acrylate and ethylene/isobutyl acrylate; unsaturated carboxylic acid polymers, for example, ethylene/acrylic acid, ethylene/methacrylic acid, ethylene/maleic acid, ethylene/fumaric acid and ethylene/itaconic acid, low molecular weight polyethylene, low molecular weight polypropylene or low molecular weight polyolefins, and the outermost layer of a non-tacky, solid plastics material (British Patent No. 1,318,745); (4) a laminated film which comprises the base layer of vinyl chloride polymers and copolymers, ethylene-vinyl alcohol copolymers, ethylene-vinyl acetate copolymers, ethylene-acrylic acid copolymers, olefin polymers and copolymers, nitrile polymers and copolymers or mixtures thereof, and the outer layer(s) of EVA (copolymer of ethylene and vinyl acetate) blend (US Patent No. 4,247,584); and (5) a laminate film of ethylene-vinyl acetate having a narrow molecular weight distribution and a saran composition that is a blend of emulsion and suspension polymerized saran or a saran composition that includes emulsion polymerised saran of the type generally considered suitable for liquid coating (US Patent No. 4,031,162), etc have been proposed.

However, any one of the above films could not be said to be a heat shrinkable laminate film which has sufficient specific properties for withstanding a high temperature in sterilisation treatment and cooking.

As a result of the present inventor's studies on a heat shrinkable laminate film which is able to give packaged articles excellent in desirable properties by shrink packaging, a shrink force of less than $4.9 \times 10^5$ Pa (50 g/mm²) with the temperature range of 80 to 98°C, it is possible to avoid the formation of holes in the laminate film on the uneven part of the surface of foods being packaged and the rupture of the seal line or the vicinity thereof. In the case where the laminate film further shows a shrinkage of not less than 20% at a temperature of 85°C, a favourable heat shrink packaging is possible. The present invention is based on these findings.

A stretched heat shrinkable laminate film according to the present invention shows a shrinkage of not less than 20% at a temperature of 85°C and a shrink force of less than $4.9 \times 10^5$ Pa (50 g/mm²) within the temperature range of 80 to 98°C, and comprises:—

a seal layer comprising an ethylenic copolymer (I), and

at least one layer comprising an ethylenic copolymer (II) of a Vicat softening point of not more than 72°C and is characterised in that said ethylenic copolymer (I) is selected from the group consisting of an ethylene copolymer of a Vicat softening point of 73 to 90°C, a cross-linked resin thereof, a mixture of a linear low density polyethylene (LLDPE) and an ethylene copolymer of a Vicat softening point of 73 to 90°C containing not more than 40% by weight of said linear low density polyethylene, a cross-linked resin of the mixture thereof and an ionomer and in that said at least one layer comprising an ethylenic copolymer (II) has a thickness of at least 4 μm and of 10—50% of the total film thickness.

When the film is used to package foods the seal layer is the innermost layer.

The heat shrinkpackaging of foods such as process meat, etc is generally carried out at a temperature of 85 to 98°C simultaneously with the sterilisation. In order to sterilise *Escherichia coli*, it is necessary to

2

carry out the shrinkpackaging for a few minutes at a temperature of 85 to 98°C and accordingly it is necessary that the shrinkage of the film is not less than 20%, preferably not less than 25%, at 85°C for obtaining a favourable packaged article. The shrinkage of the present film is represented by the mean value of the shrinkage in a longitudinal direction and the shrinkage in a transversal direction of both cases of monoaxially stretched film and of biaxially stretched film.

On the other hand, in order to prevent the forming of holes in the present film on the uneven parts of the surface of foods being packaged or rupture of the present film in the seal line, it is necessary that the shrink force is less than $4.9 \times 10^5$ Pa (50 g/mm²), preferably from $4.9 \times 10^4$ to $3.9 \times 10^5$ Pa (5 to 40 g/mm²) at a temperature of 80 to 98°C.

The present film showing the required shrinkage properties can be obtained by monoaxially or biaxially stretching a laminate film comprising a seal layer (innermost layer) of an ethylenic copolymer (I) and at least one layer of an ethylenic copolymer (II).

As the ethylene copolymers of a Vicat softening point of 73 to 90°C, ethylene-vinyl acetate copolymers and ethylene-ethyl acrylate copolymers may be exemplified, and particularly, those of a melt index (measured according to ASTM D-1234) of 0.3 to 5.0 g/10 min are preferable.

As the LLDPE which is admixed with the ethylene copolymers of a Vicat softening point of 73 to 90°C, LLDPE containing 1.0 to 30% by weight of α-olefin, which is obtained by copolymerising ethylene with an α-olefin of 4 to 18 carbon atoms such as 1-butene, 1-pentene, 4-methyl-1-pentene, 1-hexene, 1-octene, etc, particularly with an α-olefin of 4 to 10 carbon atoms may be preferably used. More particularly, it is preferable to use LLDPE showing a crystal melting point of 115 to 130°C, more preferably from 115 to 125 and showing a specific gravity of 0.900 to 0.950, more preferably from 0.900 to 0.925. As the commercialised LLDPE, Ultzex® and Neozex® (both made by Mitsui Petrochemical Co Ltd) G-resin (made by Union Carbide Corporation), Dowlex® (made by Dow Chemical Co), etc may be used. The content of the LLDPE in the mixture of the ethylene copolymers of a Vicat softening point of 73 to 90°C and the LLDPE is not more than 40% by weight, preferably not more than 30% by weight.

In the case where the content of the LLDPE is over 40% by weight, it is difficult to obtain a film showing the required properties. The film would rupture during the heat shrinking step.

The ionomer used as the ethylenic copolymer (I) in the present invention may be an ionic copolymer having ionic linkage(s), which is produced by partially or completely neutralising a copolymer of ethylene and an unsaturated carboxylic acid such as acrylic acid and methacrylic acid by cations such as alkali metal, zinc, etc. As the commercialised ionomer, Surlyn® (made by Du Pont Co) and Hi-Milan® (made by Mitsui Polychemical Co Ltd) may be exemplified.

The cross-linked resin of the ethylene copolymers of a Vicat softening point of 73 to 90°C and the cross-linked resin of the mixture of the LLDPE and the ethylene copolymers of a Vicat softening point of 73 to 90°C containing not more than 40% by weight of the LLDPE are obtained by cross-linking the ethylene copolymers and the mixture according to a known method, for instance, irradiation by electron beam.

Of the ethylenic copolymers (I), the cross-linked resin of the ethylene copolymers of a Vicat softening point of 73 to 90°C, the cross-linked resin of the mixture of LLDPE and the ethylene copolymers of a Vicat softening point of 73 to 90°C containing not more than 40% by weight of the LLDPE and the ionomers are preferable from the view point of the heat-resistance, and the ionomers are most preferably used.

As the ethylenic copolymer (II), copolymers which show a Vicat softening point of not more than 72°C, preferably from 58 to 72°C are used. Suitable examples are copolymers of ethylene and vinyl ester such as ethylene-vinyl acetate copolymer, copolymers of ethylene and an ester of an unsaturated carboxylic acid such as ethylene-alkyl acrylate copolymer and ethylene-alkyl methacrylate copolymer (the number of carbon atoms of the alkyl group being preferably one to eight), copolymers of ethylene and an α-olefin such as ethylene-propylene copolymer and ethylene-butene copolymer, copolymers of ethylene and an unsaturated carboxylic acid such as ethylene-acrylic acid copolymer and ethylene-methacrylic acid copolymer and ionomers.

Of the above-mentioned copolymers, ethylene-vinyl acetate copolymer containing 12 to 19% by weight of vinyl acetate is preferable as the ethylenic copolymer (II).

The layer comprising the ethylenic copolymer (II) may be used as any layer of the present film othr than the seal layer. Since the seal strength of the layer comprising the ethylenic copolymer (II) is low at high temperatures, it is not favourable to use the ethylenic copolymer (II) as the seal layer.

The present film preferably contains adhesive layer(s) which is disposed between the layers set forth above.

Further layers may be included in the laminate. For example where a laminate film is required to show gas-impermeability, a gas-barrier layer may be disposed between the seal layer and the layer comprising of ethylenic copolymer (II). As the gas-barrier layer, vinylidene chloride-vinyl chloride copolymers, ethylene-vinyl alcohol copolymers, polyamides and mixtures of a polyamide and an ethylene-vinyl alcohol copolymer may be exemplified. Particularly preferred is a copolymer of 65—95% by weight of vinylidene chloride and 35 to 5% by weight of vinyl chloride.

In order to firmly adhere the layers of the present film to each other, the use of adhesive layers disposed between any or all of the layers is favourable. Suitable adhesive agent may be a mixture of ethylene-vinyl acetate copolymer and ethylene-acrylic acid copolymer, ethylene-vinyl acetate copolymer, ethylene-ethyl acrylate copolymer, an acid-modified copolymer of ethylene and a vinyl ester such as vinyl acetate or an acrylic ester such as ethyl acrylate by an ethylenically unsaturated carboxylic acid such as acrylic acid or by an anhydride thereof, and a further modified copolymer prepared by further modifying the acid-modified copolymer with a metal compound such as a salt or an oxide of alkali metal or alkaline earth metal.

The present film preferably has a thickness of 20 to 120 μm. The thickness of the seal layer is preferably 10 to 80 μm. The thickness of the layer of the ethylenic copolymer (II) is at least 4 μm and is not less than 10% and less than 50% of the total thickness of the present film. The thickness of a gas-barrier layer is preferably 3 to 30 μm and the thickness of each adhesive layer is preferably 1 to 3 μm. In the case where the thickness of the seal layer is below 10 μm or over 80 μm, it is difficult to obtain a sealing of a sufficient strength. In addition, in the case where the thickness of the layer of the ethylenic copolymer (II) is below 4 μm or below 10% of the total thickness of the film, it may sometimes be difficult to attain the shrink force of less than $4.9 \times 10^5$ Pa (50 g/mm²), resulting in the possible rupture in the seal line, and on the other hand, in the case of the thickness thereof is over 50% of the total thickness of the film, the heat-resistance of the film is relatively reduced, resulting in the possible formation of holes in the uneven part of the surface foods being packaged in the heat shrink process.

Furthermore, the present film may be laminate film prepared by laminating another layer of various thermoplastic resins, for instance, the ethylenic copolymer (I) on the layer of the ethylenic copolymer (II) of a Vicat softening point of not more than 72°C.

The present film is obtained according to a conventional method, for example, by the steps of (1) preparing a non-stretched laminate film by coextruding the respective resins forming the respective layers or laminating the respective layers (separately prepared) and (2) subjecting the thus prepared non-stretched laminate film to monoaxial- or biaxial stretching. It is preferable to carry out biaxial stretching.

In addition, in the case where a cross-linked resin is used as the seal layer, it is preferable that cross-linking of the layer is achieved by irradiating an uncross-linked layer, for example, by electron beam according to a conventional method and, after the respective layers are laminated, the laminate film is monoaxially or biaxially stretched.

The stretching is preferably carried out at a temperature of 60 to 98°C. In the case of biaxial stretching, the laminate film is simultaneously or successively stretched in the longitudinal and transversal direction an amount in the range 1.5—5.0 times the original length and width respectively. In the case of monoaxial stretching, the laminate film is stretched in the longitudinal or transversal direction to an amount in the range 1.5—5.0 times the original length or width.

In packaging foods by using the present film, the foods to be packaged is conveniently placed into a tubular form film, which is then evacuated and hermetically sealed by heat sealing or by clipping. Preferably the film is sealed by heating sealing since this avoids the necessity of a wire-clip and allows easy evacuation.

In the present invention the ethylenic copolymer (I) of the seal layer, enables heat-sealing to be easily carried out to give a large seal strength at high temperatures. The layer containing the ethylenic copolymer (II) having a Vicat softening point of not more than 72°C enables the stretching to be carried out at a relatively low temperature to obtain a heat shrinkable laminate film showing the required properties.

In general, present film does not form holes in uneven parts of the surface of fatty food being packaged, is not ruptured in the seal line and can give the packaged articles an excellent appearance.

The present invention will be explained more precisely while referring to the following non-limitative Examples:

Example 1

Each of the respective resins shown in Table 1 was extruded from each of the plurality of the extruders, and by using a circular die, the thus extruded, molten resins were laminated in the order shown in Table 1 in a tubular form. The tubular laminate thus coextruded from the circular die was cooled in a cooling tank at a temperature of 15 to 20°C to obtain a flattened tubular laminate of 160 mm in flattened width and 300 μm in thickness. In the next step, the flattened tubular laminate was heated for about 10 sec by being conveyed through a hot water tank at 90°C at a speed of 20 m/min, and was passed through the first nip rolls rotating at the surface velocity of 20 m/min. The laminate was stretched transversely to 2.5 times by air supplied thereinto and, at the same time, stretched longitudinally to 2.0 times until the laminate reached the second nip rolls rotating at the surface velocity of 40 m/min, while being cooled by the atmosphere at ambient temperature. The flattened width and the thickness of the thus obtained, biaxially stretched film were 400 mm and about 60 μm, respectively.

The shrinkage and the shrinkage force of the thus obtained heat shrinkable laminate film (the present film) were measured as follows, respectively.

The shrinkage

Five specimens of 100 mm square of the present film were subjected to free heat shrinking for one to three sec in a hot water bath at 85°C, and the mean values of the longitudinal shrinkage and the transversal shrinkage were obtained, and shown in Table 1.

4

# EP 0 206 826 B1

The shrink force

A specimen of the present film of 100 mm in length and 20 mm in width was clamped in a gauge of a tensile tester (Instron), and after applying a load of 10 g in the longitudinal direction, the specimen was heated up from ordinary temperature at a rate of 5°C/2.5 min.

The measured force was divided by the initial sectional area (width×thickness) and the shrink force was represented by the quotient thereof. The maximum value at a temperature in the range 80 to 98°C is shown in Table 1.

Separately, a bag of 190 mm in width and 290 mm in depth was prepared from the thus produced laminate film by two-directional seal, and after placing a piece of hand-made ham thereinto, evacuating and heat sealing, the bag was subjected to heat treatment for 5 min in a hot water bath at 95°C. The appearance and the state of rupture of the thus packaged bag are shown in Table 1.

In the column of "the combination of layers" of Table 1, the right-most layer is the heat seal layer.

## Example 2

A copolymer of ethylene and vinyl acetate (containing 5% by weight of vinyl acetate) of a Vicat softening point of 85°C was extruded from an extruder. The extruded copolymer was irradiated by electron beam according to the method disclosed in Japanese Patent Application Laid-Open (Kokai) No. 58-82752 (1983). After extrude laminating each of the layers shown in Table 1 on the treated copolymer layer, the laminate was stretched in the same manner as in Example 1 to obtain the heat shrinkable laminate film.

## Examples 3 to 6

Further laminate films were obtained in the same manner as in Example 1 using each of the resins shown in Table 1. The shrinkage and the shrink force of the prepared films were measured by the same methods as in Example 1. In addition, the thus prepared laminate films were used for packaging the ham in the same manner as in Example 1 except for subjecting to heat-treatment under the conditions shown in Table 1. The appearance of the thus packaged ham was observed, the results also being shown in Table 1.

## Comparative example 1 to 3

Films were obtained each of the further laminate in the same manner as in Example 1 using each of the resins shown in Table 1.

The shrinkag and the shrink force of each of the thus prepared laminate films were measured in the same manner as in Example 1. A ham was packaged in the same manner as in Example 1, except for subjecting to heat treatment under the conditions shown in Table and, and the appearance of the thus packaged ham was observed. The results are shown in Table 1.

As are shown in Table 1, the films made in comparative examples are defective for various reasons (1) the shrink force of the laminate film prepared in Comparative Example 1 was too large because of the absence of the ethylenic copolymer (II), and the seal line was ruptured during the treatment in the hot water bath. (2) Since, in Comparative Example 2, the laminate film was prepared under the conditions for preventing the rupture of the seal line because of the absence of the ethylenic copolymer (II), the shrinkage was insufficient resulting in the poor appearance. (3) The laminate film prepared in Comparative Example 3 was insufficient in heat-resistance, because the seal layer comprises the ethylenic copolymer (II), resulting in the rupture of the laminate film itself as well as the seal line in the hot water bath.

TABLE 1

| | Combination of layers "/": adhesive layer[1] (thickness: μm) | Shrinkage at 85°C (%) | Shrink force at 80 to 98°C Max $10^5$ Pa (g/mm$^2$) | Conditions of thermal treatment (°C×min) | Appearance of the packaged article |
|---|---|---|---|---|---|
| Example 1 | [2] [3] [4] [5] EVA-1/EVA-2/PVDC/ Ionomer (5) (12) (10) (30) | 25 | 2.9 (30) | 95×5 | Good |
| Example 2 | [6] EVA-1/EVA-2/PVDC/ Crosslinked EVA-1 (5) (12) (10) (30) | 23 | 4.4 (45) | 93×5 | Good |
| Example 3 | [7] EVA-1/EVA-2/PVDC/ (LLDPE-EVA-1) (5) (12) (10) (30) | 22 | 3.9 (40) | 90×5 | Good |
| Example 4 | EVA-1/EVA-2/PVDC/ EVA-1 (5) (12) (10) (30) | 30 | 3.4 (35) | 85×5 | Good |
| Example 5 | EVA-2/ PVDC/ (LLDPE-EVA-1) (18) (10) (30) | 20 | 2.9 (30) | 85×5 | Although good, a little poor in transparency |
| Example 6 | EVA-1/EVA-2/Ionomer (5) (22) (30) | 40 | 4.4 (45) | 85×5 | Good |
| Comparative example 1 | (LLDPE-EVA-1)/PVDC/EVA-1 (18) (10) (30) | 25 | 6.9 (70) | 85×5 | Damage in seal line |
| Comparative example 2 | [8] EVA-1/ Nylon/EVA-1 (18) (10) (30) | 12 | 7.8 (80) | 85×5 | Insufficient in shrinking |
| Comparative example 3 | EVA-2/ Nylon/EVA-2 (18) (10) (30) | 30 | 5.9 (60) | 85×5 | Rupture in both the seal line and the film |

EP 0 206 826 B1

Notes on Table 1

*1. Except for comparative example 2, as the adhesive agent, a copolymer of ethylene and ethyl acrylate (containing 15% by weight of ethyl acrylate) was used. Only in Comparative Example 2, a copolymer of ethylene and ethyl acrylate modified by an unsaturated carboxylic acid is used as the adhesive layer. The thickness of the adhesive layer was 1 µm in all Examples and Comparative Examples.

*2. EVA-1: Copolymer of ethylene and vinyl acetate (containing 5% by weight of vinyl acetate) of a Vicat softening point of 85°C.

*3. EVA-2: Copolymer of ethylene and vinyl acetate (containing 15% by weight of vinyl acetate) of a Vicat softening point of 68°C.

*4. PVDC: Copolymer of vinylidene chloride and vinyl chloride (containing 20% by weight of vinyl chloride).

*5. Ionomer: Ionomer resin.

*6. Cross-linked EVA-1: resin prepared by irradiating EVA-1 with electron beam.

*7. LLDPE-EVA-1: 2:8 (by weight) mixture of linear low density polyethylene (crystal melting point of 120°C, specific gravity of 0.920 and Vicat softening point of 98°C) and EVA-1.

*8. Nylon: 6-66.

**Claims**

1. A stretched heat shrinkable laminate film showing a shrinkage of not less than 20% at a temperature of 85°C and a shrink force of less than $4.9 \times 10^5$ Pa (50 g/mm$^2$) within the temperature range of 80 to 98°C, comprising

a seal layer of said laminate film comprising an ethylenic copolymer (I), and

at least one layer comprising an ethylenic copolymer (II) of a Vicat softening point of not more than 72°C characterised in that said ethylenic copolymer (I) is selected from the group consisting of an ethylene copolymer of a Vicat softening point of 73 to 90°C, a cross-linked resin thereof, a mixture of a linear low density polyethylene and an ethylene copolymer of a Vicat softening point of 73 to 90°C containing not more than 40% by weight of said linear low density polyethylene, a cross-linked resin of said mixture and an ionomer, and in that said at least one layer comprising an ethylenic copolymer (II) has a thickness of at least 4 µm and of 10—50% of the total film thickness.

2. A heat shrinkable laminate film according to Claim 1, wherein said seal layer comprises an ionomer.

3. A heat shrinkable laminate film according to Claim 1, wherein said ethylenic copolymer (II) is a copolymer of ethylene and vinyl acetate containing 12 to 19% by weight of vinyl acetate.

4. A heat shrinkable laminate film according to any preceding Claim further comprising a gas-barrier layer disposed between the seal layer and the layer comprising the ethylenic copolymer II, preferably comprising a copolymer of 65—95% by weight vinylidene chloride and 35—5% by weight vinyl chloride.

5. A heat shrinkable laminate film according to any preceding Claim which is 20—120 mm thick and in which the seal layer is preferably 10—80 µm thick.

6. A heat shrinkable laminate film according to any preceding Claim comprising an adhesive layer disposed between at least two of the component layers.

7. A heat shrinkable laminate film according to any preceding Claim in which the film has been biaxially stretched during its production.

8. A method of shrink packaging foods comprising wrapping the food in a film with the seal layer innermost, evacuating the package, heat sealing the seal layers together at the open portions of the package and heat treating the sealed package, characterised in that the film is as defined in any preceding Claim.

9. A method according to Claim 8 in which heat treatment is carried out at temperature in the range 85 to 98°C for at least 1 minute.

**Patentansprüche**

1. Ein gestreckter wärmeschrumpfbarer Laminatfilm mit einer Schrumpfung von nicht weniger als 20% bei einer Temperatur von 85°C und einer Schrumpfkraft von weniger als $4,9 \times 10^5$ Pa (50 g/mm$^2$) innerhalb des Temperaturbereiches von 80 bis 98°C, mit

einer Dichtungsschicht des Laminatfilmes, die ein Äthylen-Copolymer (I) aufweist, und

zumindest einer Schicht mit einem Äthylen Copolymer (II) eines Vicat-Erweichungspunktes von nicht mehr als 72°C,

dadurch gekennzeichnet, daß das Äthylen-Copolymer (I) aus der Gruppe ausgewählt ist, die aus einem Äthylen-Copolymer von einem Vicat-Erweichungspunkt von 73 bis 90°C, einem vernetzten Kunstharze desselben, einer Mischung aus einem linearen Polyäthylen niedriger Dichte und einem Äthylen-Copolymer mit einem Vicat-Erweichungspunkt von 73 bis 90°C, die nicht mehr also 40 Gew.-% des linearen Polyäthylenes mit niedriger Dichte enthält, einem vernetzten Kunstharz dieses Gemisches und einem Ionomer enthält und dadurch, daß diese zumindest eine Schicht ein Äthylen-Copolymer (II) aufweist mit einer Dicke von zumindest 4 µm und von 10 bis 50% der gesamten Filmdicke.

7

# EP 0 206 826 B1

2. Wärmeschrumpfbarer Laminatfilm nach Anspruch 1, bei dem die Dichtungsschicht ein Ionomer aufweist.

3. Wärmeschrumpfbarer Laminatfilm nach Anspruch 1, bei dem das Äthhylen-Copolymer (II) ein Copolymer von Äthylen und Vinylacetat ist, das 12 bis 19 Gew.-% Vinylacetate enthält.

4. Wärmeschrumpfbarer Laminatfilm nach einem der vorhergehenden Ansprüche mit außerdem einer Gassperrschicht, angeordnet zwischen der Dichtungsschicht und der Schicht, die das Äthylen-Copolymer (II) enthält, vorzugsweise enthaltend ein Copolymer von 65 bis 95 Gew.-% Vinylidenchlorid und 35 bis 5 Gew.-% Vinylchlorid.

5. Wärmeschrumpfbarer Laminatfilm nach einem der vorhergehenden Ansprüche, der 20 bis 120 mm dick ist und in dem die Dichtungsschicht vorzugsweise 10 bis 80 µm dick ist.

6. Wärmeschrumpfbarer Laminatfilm nach einem der vorhergehenden Ansprüche mit einer Klebstoffschicht, angeordnet zwischen zumindest zwei Teilschichten.

7. Wärmeschrumpfbarer Laminatfilm nach einem der vorhergehenden Ansprüche, bei der Film während seiner Herstellung biaxial gestreckt worden ist.

8. Verfahren zum Schrumpfverpacken von Nahrungsmitteln, enthaltend das Umhüllen des Nahrungsmittels in einem Film, wobei die Dichtungsschicht innen liegt, Evakuieren des Packs, Heißsiegeln der Dichtungsschichten miteinander an den offenen Abschnitten des Packs und Wärmebehandeln des abgedichteten Packs, dadurch gekennzeichnet, daß das der Film ein Film, wie er in einem der vorhergehenden Ansprüche definiert wurde, ist.

9. Verfahren nach Anspruch 8, bei dem die Wärmebehandlung bei einer Temperatur im Bereich von 85 bis 98°C für zumindest eine Minute ausgeführt wird.

**Revendications**

1. Pellicule stratifiée thermorétractable étirée, présentant une rétraction d'au moins 20% à une température de 85°C et une force de rétraction de moins de 4,9×10⁵ Pa (50 g/mm²) dans la plage de températures de 80 à 98°C, comprenant

une couche de soudure de ladite pellicule stratifiée comprenant un copolymère éthylénique (I), et

au moins une couche comprenant un copolymère éthylénique (II) ayant un point de ramollissement Vicat n'excédant pas 72°C, caractérisée en ce que ledit copolymère éthylénique (I) est choisi parmi un copolymère d'éthylène ayant un point de ramollissement Vicat de 73 à 90°C, une résine réticulée à base de celui-ci, un mélange d'un polyéthylène basse densité linéaire et d'un copolymère d'éthylène ayant un point de ramollissement Vicat de 73 à 90°C, ne contenant pas plus de 40% en poids dudit polyéthylène basse densité linéaire, une résine réticulée à base dudit mélange et d'un ionomère, et en ce que ladite au moins une couche comprenant un copolymère éthylènique (II) a une épaisseur d'au moins 4 µm et constituant 10—50 % de l'épaisseur totale de la pellicule.

2. Pellicule stratifiée thermorétractable selon la revendication 1, dans laquelle ladite couche de soudure comprend un ionomère.

3. Pellicule stratifiée thermorétractable selon la revendication 1, dans laquelle ledit copolymère éthylène (II) est un copolymère d'éthylène et d'acétate de vinyle contenant de 12 à 19% en poids d'acétate de vinyle.

4. Pellicule stratifiée thermorétractable selon l'une quelconque des revendications précédentes, comprenant en outre une couche imperméable aux gaz disposée entre la couche de soudure et la couche comprenant le copolymère éthylénique (II), comprenant de préférence un copolymère de 65—95% en poids de chlorure de vinylidène et 35—5% en poids de chlorure de vinyle.

5. Pellicule stratifiée thermorétractable selon l'une quelconque des revendications précédentes, qui a une épaisseur de 20—120 µm et dans laquelle la couche de soudure a de préférence une épaisseur de 10—80 µm.

6. Pellicule stratifiée thermorétractable selon l'une quelconque des revendications précédentes, comprenant une couche adhésive disposée entre au moins deux des couches composantes.

7. Pellicule stratifiée thermorétractable selon l'une quelconque des revendications précédentes, caractérisée en ce que la pellicule a été étirée biaxialement pendant sa fabrication.

8. Procédé de conditionnement de produits alimentaires par rétraction, comprenant l'emballage du produit alimentaire dans une pellicule avec la couche de soudure tournée vers l'intérieur, la mise sous vide du conditionnement, le thermosoudage des couches de soudure l'une avec l'autre au niveau des parties ouvertes du conditionnement, et le traitement thermique du conditionnement scellé, caractérisé en ce que la pellicule est telle que définie dans l'une quelconque des revendications précédentes.

9. Procédé selon la revendication 6, dans lequel le traitement thermique est effectue à une température dans la plage de 85 à 98°C pendant au moins 1 minute.

8